# EUROPÄISCHE PATENTANMELDUNG

(11) **EP 2 733 571 A1**
(43) Veröffentlichungstag der Anmeldung: **21.05.2014**
(21) Anmeldenummer: 12193468.1
(22) Anmeldetag: 20.11.2012
(51) Int. Cl.: G06F 1/32

(54) **Ein-Chip-System**

(71) Anmelder: Siemens Aktiengesellschaft, 80333 München (DE)
(72) Erfinder: Wollenhaupt, Michael, 76185 Karlsruhe (DE)

(57) **Zusammenfassung**

Die Erfindung betrifft ein Ein-Chip-System mit mehreren Hardware-Einheiten(4, 5, 6), die jeweils mittels mindestens eines Firmware-Moduls (10, 11, 12) eines Controllers (2) angesteuert werden, und mit einer Clock-Control-Einheit (3), welche für die jeweilige Hardware-Einheit (4, 5, 6) ein Arbeitstaktsignal (f_{mod4}, f_{mod5}, f_{mod6}) aus einem Systemtaktsignal (f_{sys}) erzeugt. Es sind geeignete Maßnahmen vorgesehen, mittels welcher das Ein-Chip-System mit einem verminderten Leistungsbedarf betrieben werden kann.

## Beschreibung

Die Erfindung betrifft ein Ein-Chip-System mit mehreren Hardware-Einheiten, die jeweils mittels mindestens eines Firmware-Moduls eines Controllers angesteuert werden, und mit einer Clock-Control-Einheit, welche für die jeweilige Hardware-Einheit ein Arbeitstaktsignal aus einem Systemtaktsignal erzeugt.

Ein derartiges Ein-Chip-System (System on Chip), beispielsweise der elektronische Baustein IBC32 der Firma Infineon, verwirklicht eine Vielzahl von Hardware-Einheiten eines Systems auf einem Chip. Diese Hardware-Einheiten, z. B. Hardware-Einheiten in Form eines Prozessors, eines Controllers, eines Timers, einer Busverbindung oder eines Flash-Speichers, werden jeweils mittels mindestens eines Moduls einer Firmware eines Controllers angesteuert, wobei während des Hochlaufs des Systems alle Hardware-Einheiten statisch aktiviert werden. Dadurch wird sichergestellt, dass die jeweilige Hardware-Einheit während des Betriebs stets von unterschiedlichen Firmware-Modulen genutzt werden kann. Beispielsweise muss ein NAND-Flash des Ein-Chip-Systems nach einem Zugriff durch ein Firmware-Modul, welches für eine Ethernet-Kommunikation vorgesehen ist, aktiviert bleiben, weil zu einem späteren Zeitpunkt ein für eine Bus-Kommunikation, z. B. für eine CAN-Bus-Kommunikation ausgebildetes Firmware-Modul ebenfalls auf dieses NAND-Flash zugreift.

Dadurch, dass alle Hardware-Einheiten nach dem Hochlauf stets aktiviert bleiben, ist während des Betriebs des Ein-Chip-Systems der Leistungsbedarf hoch, wobei ferner geeignete Maßnahmen für eine ausreichende Wärmeabfuhr vorgesehen werden müssen.

Der Erfindung liegt daher die Aufgabe zugrunde, ein Ein-Chip-System der eingangs genannten Art zu schaffen, welches mit einem verminderten Leistungsbedarf betrieben werden kann.

Diese Aufgabe wird dadurch gelöst,
- dass die Clock-Control-Einheit für die jeweilige Hardware-Einheit zur Anzeige des Belegungszustands dieser Hardware-Einheit einen Hardware-Semaphor aufweist,
- dass zur Beeinflussung dieses Hardware-Semaphors Semaphor-Operationen des mindestens einen Firmware-Moduls vorgesehen sind, und
- dass in Abhängigkeit des Belegungszustands die Clock-Control-Einheit mittels des Arbeitstaktsignals die Hardware-Einheit in einen Sleep-Modus versetzt oder abschaltet.

Vorteilhaft ist, dass während des Betriebs des Ein-Chip-Systems die Hardware-Einheiten dynamisch aktiviert oder deaktiviert werden können. Dazu wird das jeweilige Arbeitstaktsignal dieser Hardware-Einheiten entsprechend beeinflusst, um je nach Belegungszustand die jeweilige Hardware-Einheit in einen Sleep-Modus (Strom sparender Betriebszustand) zu versetzen, ganz abzuschalten oder wieder zu aktivieren. Aufgrund dieser dynamischen Aktivierung und Deaktivierung reduziert sich der Leistungsbedarf des Ein-Chip-Systems, wobei die Hardware-Semaphore zur Steuerung des Leistungs- bzw. Energiebedarfs eingesetzt werden und ein intelligentes Powermanagement verwirklicht wird. Im Sleep-Modus kann die jeweilige Hardware-Einheit mit einem Arbeitstaktsignal betrieben werden, für welches abgestufte Frequenzen vorgesehen ist, wodurch die Energieaufnahme flexibel gestaltet wird.

In einer Ausgestaltung der Erfindung ist der Hardware-Semaphor ein zählender Semaphor, wobei die Semaphor-Operationen den zählenden Semaphor inkrementieren oder dekrementieren. Vor einem Zugriff bzw. einer Belegung einer Hardware-Einheit durch die Firmware-Module, z. B. eine Hardware-Einheit in Form eines Timers, inkrementieren die Firmware-Module mittels einer geeigneten Semaphor-Operation den zählenden Semaphor. Der Timer bleibt aktiv, falls der Zählerstand des zählenden Semaphors "größer Null" ist. Das jeweilige Firmware-Modul dekrementiert mittels einer weiteren geeigneten Semaphor-Operation den zählenden Semaphor nach einem Zugriff bzw. nach einer Belegung durch dieses Firmware-Modul, wobei für den Fall, dass der Zählerstand "Null" ist, der Timer in den Sleep-Modus versetzt wird, indem die Clock-Control-Einheit das Arbeitstaktsignal für den Timer entsprechend reduziert.

In einer weiteren Ausgestaltung der Erfindung ist der Hardware-Semaphor als ein binärer Semaphor ausgebildet. Eine Hardware-Einheit wie beispielsweise ein NAND- oder NOR-Flash kann mittels eines derartigen Semaphors einfach aktiviert oder deaktiviert werden. Falls ein Firmware-Modul den binären Semaphor setzt, kann das NAND- oder NOR-Flash verwendet werden. Das NAND- oder NOR-Flash wird dagegen abgeschaltet, falls das Firmware-Modul den binären Semaphor zurücksetzt.

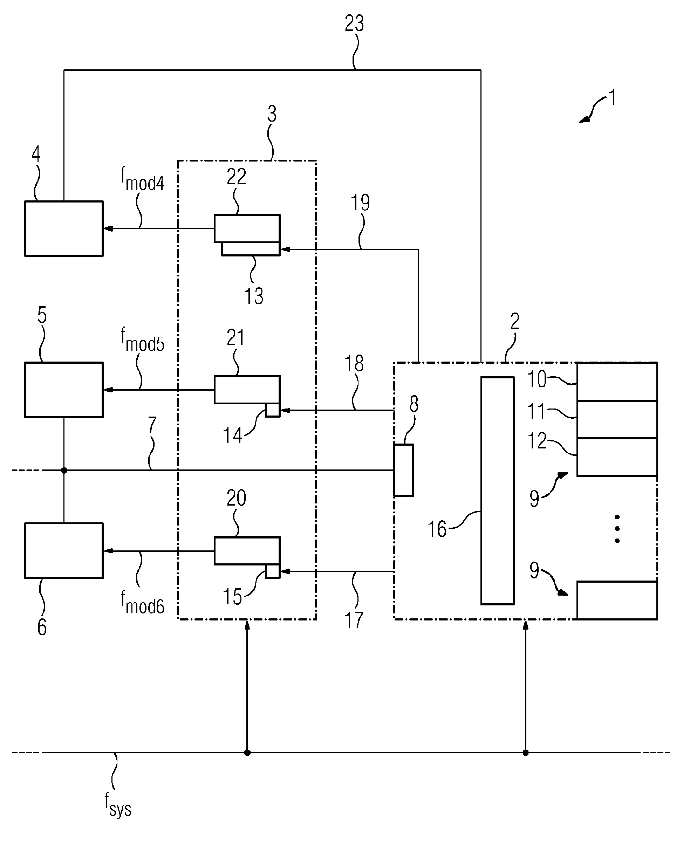

Die Erfindung, deren Ausgestaltungen sowie Vorteile werden nachfolgend anhand eines Ausführungsbeispiels unter Bezugnahme auf die einzige Figur der Zeichnung näher erläutert. Die Figur der Zeichnung zeigt in vereinfachter Darstellung ein Ein-Chip-System.

Ein Ein-Chip-System 1 weist einen Controller 2, eine Clock-Control-Einheit 3 sowie mehrere Hardware-Einheiten auf, von denen im vorliegenden Ausführungsbeispiel eine Hardware-Einheit als Timer 4, eine als NAND-Flash 5 und eine weitere als NOR-Flash 6 ausgebildet ist. Das NAND-Flash 5 und das NOR-Flash 6 sind an eine Hardware-Einheit in Form eines Busses 7 angeschlossen, der mit einer Busanschaltung 8 des Controllers 2 verbunden ist. Über eine Systemtaktleitung wird der Clock-Control-Einheit 3 ein Systemtaktsignal f_{sys} übermittelt, aus welchem die Clock-Control-Einheit 3 für den Timer 4 sowie für das NAND- und das NOR-Flash jeweils ein Arbeitstaktsignal f_{mod4}, f_{mod5}, f_{mod6} erzeugt. Diese Arbeitstaktsignale f_{mod4}, f_{mod5}, f_{mod6} können unterschiedliche Arbeitstaktfrequenzen aufweisen, wobei die Clock-Control-Einheit 3 diese Arbeitstaktsignale f_{mod4}, f_{mod5}, f_{mod6} über Taktleitungen den Hardware-Einheiten 4, 5, 6 zuführt.

Im Folgenden wird angenommen, dass der Controller 2 einen Firmware-Baustein 9 aufweist, in welchem eine Vielzahl von Firmware-Modulen 10, 11, 12 ... hinterlegt ist. Ferner wird angenommen, dass das Firmware-Modul 10, welches z. B. ein Entwickler zur Verwirklichung eine Ethernet-Kommunikation erstellt hat, zeitweise den Timer 4 sowie das NAND- und NOR-Flash 5, 6 belegt, und die weiteren Firmware-Module 10, 11 zeitweise das NAND- und NOR-Flash 5, 6 belegen.

Um den Timer 4 und das NAND- und NOR-Flash 5, 6 während des Betriebs des Ein-Chip-Systems 1 dynamisch aktivieren und deaktivieren zu können, weist die Clock-Control-Einheit 3 für jeden dieser Hardware-Bausteine 4, 5, 6 einen Hardware-Semaphor auf. Im vorliegenden Ausführungsbeispiel ist für den Timer 4 ein zählender Semaphor 13 und für das NAND- und NOR-Flash 5, 6 jeweils ein binärer Semaphor 14, 15 vorgesehen, wobei diese Semaphore mittels der Firmware-Module 10, 11, 12 ... über einen Treiber-Baustein 16 des Controllers 3 und über Leitungen 17, 18, 19 beeinflussbar sind.

Für den Fall, dass beispielweise ein Zugriff des Firmware-Moduls 10 auf das NOR-Flash 6 über den Treiber-Baustein 16 und über den Bus 8 bevorsteht, setzt dieses Firmware-Modul 10 den binären Semaphor 15 mittels einer geeigneten Semaphor-Operation. Dies bewirkt, dass das NOR-Flash 6 aktiviert ist, wobei dazu ein Clock-Generator 20 dem NOR-Flash 6 das für dieses Flash 6 vorgesehene Arbeitstaktsignal f_{mod6} zuführt. Für den Fall, dass der Zugriff beendet ist, setzt das Firmware-Modul 10 den binären Semaphor 15 mittels einer weiteren Semaphor-Operation zurück, wodurch der Clock-Generator 20 das Arbeitstaktsignal f_{mod6} auf Null setzt und das NOR-Flash 6 deaktiviert, falls die Firmware-Module 10, 11, 12 ... keinen weiteren Zugriff anzeigen. Für den Fall, dass ein weiterer Zugriff der Firmware-Module 10, 11, 12 ... auf das NOR-Flash 6 angezeigt wird, bleibt das NOR-Flash 6 aktiviert, indem der binäre Semaphor 15 durch die Firmware-Module 10, 11, 12 ... gesetzt wird.
In der beschriebenen Art und Weise erfolgt die Aktivierung und Deaktivierung des NAND-Flashs 5 mittels der Firmware-Module 10, 11, 12 ... über den Treiber-Baustein 16 und der Leitung 18. Dabei wird der binäre Semaphor 14 gesetzt bzw. zurückgesetzt und mittels eines Clock-Generators 21 wird das Arbeitstaktsignal f_{mod5} und somit das NAND-Flash 5 entsprechend aktiviert bzw. deaktiviert.
Die Clock-Control-Einheit 3 ist derart ausgestaltet, den Bus 7 abzuschalten bzw. zu deaktivieren, falls kein Busteilnehmer aktiv ist. Das bedeutet, dass im vorliegenden Ausführungsbeispiel die Clock-Control-Einheit 3 den Bus 7 deaktiviert, falls sowohl das NAND- als auch das NOR-Flash deaktiviert ist.

Wie beschrieben ist für den Timer 4, der über eine weitere Leitung 23 mit dem Controller 2 verbunden ist, der zählende Semaphor 13 vorgesehen. Dieser zählende Semaphor 13 wird mittels einer Semaphor-Operation der jeweiligen Firmware-Module 10, 11, 12 ... inkrementiert sowie mittels einer weiteren Semaphor-Operation der jeweiligen Firmware-Module 10, 11, 12... dekrementiert. Ein Clock-Generator 22 setzt das Arbeitstaktsignal f_{mod4} auf Null oder setzt die Frequenz dieses Arbeitstaktsignals f_{mod4} herab, falls der Zählerstand "Null" ist. In diesem Fall ist der Timer 4 in einen Sleep-Modus versetzt. Für den Fall, dass der Zählerstand "größer Null" ist, wird der Timer 4 aktiviert bzw. der Timer 4 bleibt aktiviert. Der Clock-Generator 22 kann derart ausgebildet sein, in Abhängigkeit des Zählerstands eine abgestufte Arbeitstaktfrequenz (Null bis Maximalfrequenz) zu erzeugen.

Die Erfindung lässt sich somit wie folgt zusammenfassen: Ein-Chip-System mit mehreren Hardware-Einheiten 4, 5, 6, die jeweils mittels mindestens eines Firmware-Moduls 10, 11, 12 eines Controllers 2 angesteuert werden, und mit einer Clock-Control-Einheit 3, welche für die jeweilige Hardware-Einheit 4, 5, 6 ein Arbeitstaktsignal f_{mod4}, f_{mod5}, f_{mod6} aus einem Systemtaktsignal f_{sys} erzeugt, zeichnet sich dadurch aus,
- dass die Clock-Control-Einheit 3 für die jeweilige Hardware-Einheit 4, 5, 6 zur Anzeige des Belegungszustands dieser Hardware-Einheit 4, 5, 6 einen Hardware-Semaphor 13, 14, 15 aufweist,
- dass zur Beeinflussung dieses Hardware-Semaphors 13, 14, 15 Semaphor-Operationen des mindestens einen Firmware-Moduls 10, 11, 12 vorgesehen sind, und
- dass in Abhängigkeit des Belegungszustands die Clock-Control-Einheit 3 mittels des Arbeitstaktsignals f_{mod4}, f_{mod5}, f_{mod6} die Hardware-Einheit 4, 5, 6 in einen Sleep-Modus versetzt oder abschaltet.

Mittels derartiger Maßnahmen kann das Ein-Chip-System mit einem verminderten Leistungsbedarf betrieben werden.

## Patentansprüche

1. Ein-Chip-System mit mehreren Hardware-Einheiten(4, 5, 6), die jeweils mittels mindestens eines Firmware-Moduls (10, 11, 12) eines Controllers (2) angesteuert werden, und mit einer Clock-Control-Einheit (3), welche für die jeweilige Hardware-Einheit (4, 5, 6) ein Arbeitstaktsignal (f_{mod4}, f_{mod5}, f_{mod6}) aus einem Systemtaktsignal (f_{sys}) erzeugt, **dadurch gekennzeichnet,**
- **dass** die Clock-Control-Einheit (3) für die jeweilige Hardware-Einheit (4, 5, 6) zur Anzeige des Belegungszustands dieser Hardware-Einheit (4, 5, 6) einen Hardware-Semaphor (13, 14, 15) aufweist,
- **dass** zur Beeinflussung dieses Hardware-Semaphors (13, 14, 15) Semaphor-Operationen des mindestens einen Firmware-Moduls (10, 11, 12) vorgesehen sind, und
- **dass** in Abhängigkeit des Belegungszustands die Clock-Control-Einheit (3) mittels des Arbeitstaktsignals (f_{mod4}, f_{mod5}, f_{mod6}) die Hardware-Einheit (4, 5, 6) in einen Sleep-Modus versetzt oder abschaltet.

2. Ein-Chip-System nach Anspruch 1, **dadurch gekennzeichnet, dass** der Hardware-Semaphor (13, 14, 15) ein zählender Semaphor (13) ist, wobei die Semaphor-Operationen den zählenden Semaphor (13) inkrementieren oder dekrementieren.

3. Ein-Chip-System nach Anspruch 1, **dadurch gekennzeichnet, dass** der Hardware-Semaphor (13, 14, 15) ein binärer Semaphor ist (14, 15).
